# EUROPEAN PATENT APPLICATION

(11) **EP 1 813 501 A1**
(43) Date of publication of application: **01.08.2007**
(21) Application number: 07101196.9
(22) Date of filing: 25.01.2007
(51) Int. Cl.: B62B 1/12, B62B 1/14, B62B 3/06

(54) **Elevation truck**

(30) Priority: 25.01.2006 DK 200600028 U
(71) Applicant: Richter, Kim, Harup, 8530 Hjortshoj (DK); Poulson, Peter, Harup, 8530 Hjortshoj (DK)
(72) Inventor: Richter, Kim, Harup, 8530 Hjortshoj (DK); Poulson, Peter, Harup, 8530 Hjortshoj (DK)
(74) Representative: Holme Patent A/S

(57) **Abstract**

An elevation truck serves for moving a load from one place to another. The elevation truck comprises a frame (1) having at least two drive wheels (5) and at least one lever (4) for handling the elevation truck, at least one fork (22) for supporting a load during operation, a carrier (8) on which the at least one fork (22) is mounted and arranged to be displaced up and down on the frame (1) between a lower and an upper position and an actuator (11,16) for displacing the carrier (8). The actuator (11,16) of the elevation truck comprises at least one double-armed lever (11) pivotally journaled on the frame (1). The elevation truck has a simple design and is easy to handle. A load can be moved quickly and safely from a lower to a higher level.

## Description

The invention relates to an elevation truck of the kind comprising a frame having at least two drive wheels and at least one lever for handling the elevation truck, at least one fork for supporting a load during operation, a carrier on which the at least one fork is mounted and arranged to be displaced up and down on the frame between a lower and an upper position and an actuator for displacing the carrier.

The invention also relates to a method for moving e.g. a pallet from a first supporting base to a second supporting base located at a higher elevation by means of the elevation truck.

Elevation trucks in form of sack trucks are largely used for moving loads located on a pallet located on a supporting base, e.g. a floor. A sack truck is normally constructed with a frame having a handle for handling the truck and forks or supporting plates mounted on the frame and pushed in under the pallet when the frame of the sack truck is in upright position. Then, the sack truck is tilted backwards so that the pallet is lifted free of the supporting base, after which the pallet can be driven to a second supporting base. Here, the sack truck is tilted back to said upright position to thereby be able to put the pallet on the new supporting base. Finally, the forks are pulled free of the pallet.

The frames of the sack trucks are often longer than their forks or supporting plates whereby the user is able to move even relatively heavy loads.

In some cases, it is desired to lift the pallet with load to a higher level than is possible by means of a regular sack truck.

This problem is tried solved by means of elevation trucks which are arranged with forks or supporting plates on carriers in form of carriages or slides which can be displaced along the frame between a lower and a higher level by means of an actuator.

In the course of time, actuators have been developed for this purpose, which however all have a rather complex structure and furthermore are time-consuming to use.

As an example of such an actuator, a wire winch can be mentioned, the wire of which is connected to the carrier. Even heavy loads can be elevated to a desired height by means of such a wire winch.

The above disadvantages from which the known elevation trucks suffer are remedied according to the invention by
in a first aspect of the invention providing an elevation truck of the kind mentioned in the opening paragraph, that has a simple construction,
in a second aspect of the invention providing an elevation truck of the kind mentioned in the opening paragraph, that is easy to operate,
in a third aspect of the invention providing an elevation truck of the kind mentioned in the opening paragraph, by means of which a load can be moved quickly from a lower to a higher level,
in a fourth aspect of the invention providing an elevation truck of the kind mentioned in the opening paragraph, that is arranged to elevate a load a pre-determined distance from a given level,
in a fifth aspect of the invention providing an elevation truck of the kind mentioned in the opening paragraph, that is arranged to elevate even heavy loads,
in a sixth aspect of the invention providing an elevation truck of the kind mentioned in the opening paragraph, that is provided with an actuator which functions for certain.

The novel and unique feature according to the invention, whereby this is achieved, is the fact that the actuator comprises at least one double-armed lever pivotally journaled on the frame, the first arm actuating the actuator by means of a load and the second arm pivotally engaging the carrier.

Thereby, the elevation truck according to the invention obtains a simple construction that is easy to operate, and by means of which the user can lift a load quickly and easily merely by pressing the first arm of the lever downwards.

If the first arm is longer than the second arm, a transmission enabling the user to lift even heavy loads is furthermore formed.

In one embodiment according to the invention, the second arm of the lever can engage the carrier directly in a simple manner.

In a second embodiment according to the invention, the second arm of the lever can engage the carrier via a tie rod pivotally connected to said second arm at one end and pivotally connected to an essentially lower area of the carrier at the other end. Thereby, an actuator that functions for certain is obtained.

According to the invention, the carrier can be a carriage having wheels that can easily move on the frame. In an especially simple embodiment, the carrier according to the invention can however also be a slide having rails which can slide on the frame.

According to the invention, the actuator can comprise two levers each having a first and a second arm. The two first arms can furthermore be interconnected by a bar-shaped foot pedal for actuating the actuator by means of a foot.

Thereby, the actuator obtains a stably operating construction which the user furthermore can activate easily and effortlessly by means of a foot and in this way advantageously apply part of his weight to lift the load.

In an especially advantageous embodiment, the elevation truck according to the invention can comprise an elongated pawl pivotally mounted on the frame at one end and bearing against a bearing contact on the frame with the free, second end when this frame is tilted backwards to an angle equal to or smaller than a pre-determined angle in relation to a vertical plane. By means of this structure, a load can be moved safely from one supporting base to a supporting base located at a higher elevation.

The invention will be explained in greater details below, describing only advantageous characteristics and exemplary embodiments with reference to the drawing, in which
Fig. 1 is a perspective view of an elevation truck according to the invention,
Fig. 2 is a side elevational fractional view on a larger scale of the elevation truck in upright position with lowered carrier and a pivotal pawl hanging freely down from the carrier under the influence of gravity, and
Fig. 3 is a view of the elevation truck in fig. 2 but with the elevation truck in a backwardly inclined position with elevated carrier and the pawl in locking engagement with the frame.

In the following, it is assumed that the elevation truck according to the invention is used for moving bricks on a pallet from one place to another.

Bricks are normally delivered to a construction site on small pallets placed on a large pallet in a number of e.g. four.

The small pallets are moved one at a time from the large pallet onto the scaffolding on which the bricklayer is standing.

Traditionally, the lowest bricks on the pallet will now be at a height of about 20 cm above the floor while the bricks are to be laid at a height of up to about 170 cm.

The span of about 150 cm between these two heights forces the bricklayer to bend down low to reach the low-lying bricks on the pallet and then straighten up to a relatively great height to be able to lay the bricks on the brickwork under construction.

During a work day, the bricklayer must repeatedly perform this wearisome, laborious, and strenuous operation at the result in that he/she may gradually be worn down and suffer serious physical injuries.

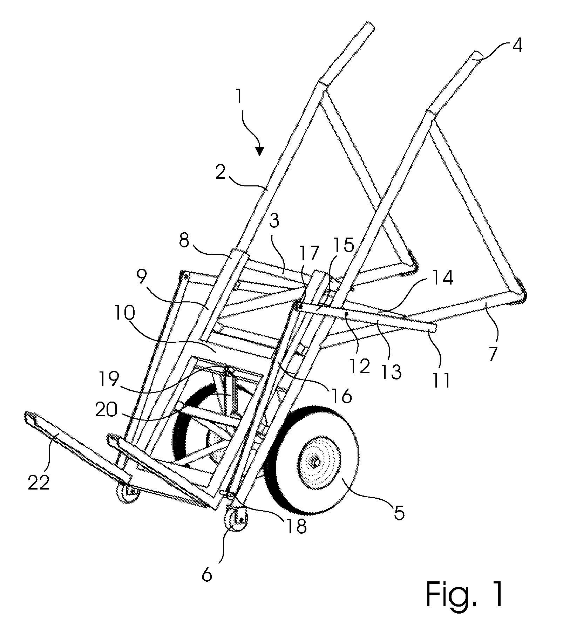

Therefore, there is a need to relieve the work, and this can take place by means of the elevation truck according to the invention such as will be described in detail in the following with reference to figs. 1 - 3.

The main element of the elevation truck is a frame 1 having two side members 2 interconnected by crossbars 3. At the top the frame is provided with two handles 4 for handling the truck and at the bottom with two large drive wheels 5 and two smaller drive wheels 6 for use if a pallet of bricks (not shown) is to be driven from one place to another. Furthermore, the frame is provided with two shackle-shaped legs 7 for supporting the elevation truck when it is in an inclined position of rest.

A carrier 8 in form of a carriage or slide is displaceably mounted on the frame. In the case shown, the carrier comprises two rails 9 interconnected by crossbars 10.

A U-shaped, double-armed lever 11 is pivotally connected to the side members 2 of the frame by means of bearings 12. The lever has two longer arms 13 interconnected by a bar-shaped foot pedal 14 for being depressed by means of a foot. Furthermore, the lever has two shorter arms 15.

The relation between the shorter and longer arms is chosen so that an advantageous transmission ratio is obtained.

Two tie rods 16 are pivotally connected at one end to the short arms 15 by bearings 17 and at the other end to a lower area on the carrier 8 by bearings 18.

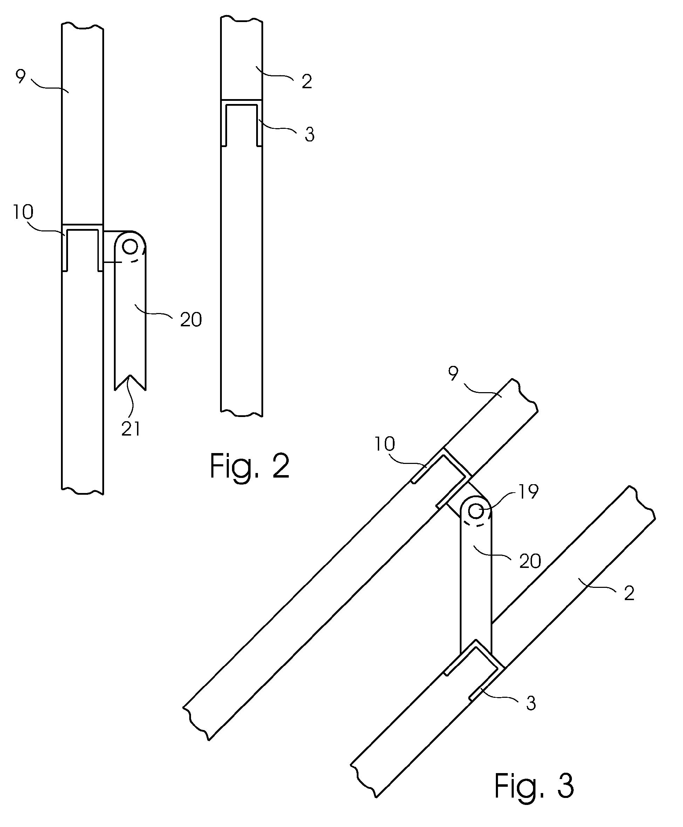

The crossbars 10 of the carrier 8 are pivotally mounted to a hanging pawl 20 by means of a bearing 19. The functioning of this one is illustrated the best in figs. 2 and 3 which on a larger scale are diagrammatic fractional views of the elevation truck in two positions.

Figs. 2 and 3 show only one side member 2 and one crossbar 3 on the frame 1 and one rail 9 and one crossbar 10 on the carrier 8. Also shown is the pawl 20 which is pivotally mounted on the crossbar 10 of the carrier.

In fig. 2, the elevation truck is shown in a vertical position and in fig. 3 in a backwardly inclined position. By vertical is meant, in the sense of the invention, not exactly vertical but merely that the elevation truck is in an upright position of a smaller inclination in relation to a vertical plane than shown in fig. 3.

As shown, the pawl 20 hangs freely down in fig. 2 under the influence of gravity. When the elevation truck is tilted to the position in fig. 3, the pawl will, all things being equal, still hang freely down. By displacing the carrier upwards on the frame until the pawl 20 is located vertically above the crossbar 3 of the carrier and then lowering the carrier again, the pawl will engage the crossbar and thereby lock the carrier to the frame.

To ensure an effective locking engagement, the pawl is, at the bottom, made with a recess 21 fitting the crossbar of the frame.

Furthermore, a stop (now shown) can be mounted on the elevation truck to prevent the pawl from swinging past the crossbar of the frame upon backwards tilting of the elevation truck.

As mentioned previously, the carrier 8 is displaceably mounted on the frame 1.

When the bar-shaped foot pedal 14 then is depressed by means of a foot, the carrier is therefore displaced from a lower to an upper position, the short arms 15 of the lever 11 being pivotally connected to the carrier via the tie rods 16.

As mentioned, the carrier is locked to the frame in the upper position by means of the pawl. When the elevation carrier is placed in upright position and the foot pedal depressed by a foot, the pawl is disengaged from its locking engagement and swings back to the hanging position in fig. 2. The carrier can now be lowered to its lower position by successively relieving the pressure of the foot on the pedal.

Two forks 22 are furthermore mounted at the bottom of the carrier for supporting the pallet of bricks during use. A supporting plate can be used instead of forks.

The elevation truck is used in the following way to move a small pallet of bricks from a large pallet to the scaffolding on which the bricklayer is standing.

In the upright position of the elevation truck, the forks are moved in under the pallet to be moved. The elevation truck is then tilted backwards so that the pallet is lifted free of the large pallet, after which the pallet is moved up onto the scaffolding with the forks preferably in the lower position.

On the scaffolding, a raised platform (not shown) has now been placed in advance, on which the pallet is to be placed. The top of this raised platform is at a higher level than the pallet when the forks are in the lower position. The carrier with forks therefore have to be elevated to the upper position before the pallet can be placed on the raised position.

The elevation of the carrier takes place by first tilting the elevation truck backwards so that it will be standing stably with the legs 7 on the floor of the scaffolding and then depressing the foot pedal 14 by a foot so that the pawl 20 on the carrier will hang vertically over the crossbar 3 of the frame, after which the carrier is lowered a little by relieving the pressure on the foot pedal until the pawl engages the crossbar.

The bricks on the pallet can have a substantial weight, for example between 100 and 120 kg. If the frame of the elevation truck is inclined e.g. 45°, it only takes a force corresponding to half this weight to be able to elevate the loaded carrier. The force is reduced further by means of the transmission of the lever which e.g. can be 1 - 2. In this case, the foot pedal is only depressed by a force of between 25 and 30 kg.

The carrier is now safely locked to the frame so that the elevation truck can be raised to the upright position, after which the pallet can be placed on the raised platform and the forks pulled free of the pallet.

The elevation truck according to the invention thus makes it possible to significantly reduce the previously mentioned span that the bricklayer had to span.

The former span of 150 cm can e.g. be reduced to 100 cm so that the bricklayer thereby obtains significantly better conditions in order to do his job.

By means of the elevation truck according to the invention the bricklayer is thus spared much of the previous, wearisome, laborious and strenuous work and from being worn down to early. The bricklayer will furthermore not be subjected to injuries in the same degree due to the work.

It is to be noted that the elevation truck also can be used without pawl.

The invention is described above on the exemplary assumption that the elevation truck according to the invention is used for moving and lifting pallets of bricks.

The elevation truck can of course also be used for performing the same process in inverse order, that is lift a pallet of e.g. bricks form a higher level and lowering it to a lower level and move the pallet from one place to another.

Within the scope of the invention, the elevations truck can furthermore be used for moving and/or lifting many other objects than bricks.

## Claims

1. An elevation truck of the kind comprising a frame (1) having at least two drive wheels (5) and at least one lever (4) for handling the elevation truck, at least one fork (22) for supporting a load during operation, a carrier (8) on which the at least one fork (22) is mounted and arranged to be displaced up and down on the frame between a lower and an upper position and an actuator (11, 16) for displacing the carrier (8), **characterized in that** the actuator (11, 16) comprises at least one double-armed lever (11) pivotally journaled on the frame (1), the first arm (13) for actuating the actuator (11, 16) by means of a load and the second arm (15) pivotally engaging the carrier (8).

2. An elevation truck according to claim 1, **characterized in that** the second arm (13) of the at least one double-armed lever (11) is articulated to the carrier (8) by means of a tie rod (16).

3. An elevation truck according to claim 1 or 2, **characterized in that** the first arm (13) of the at least one lever (11) is longer than its second arm (15).

4. An elevation truck according to claim 1, 2 or 3, **characterized in that** the actuator (11, 16) comprises two levers (11), each having a first and a second arm (13; 15) and that the two first arms are interconnected to a bar-shaped foot pedal (14) for actuating the actuator (11, 16) by means of a foot.

5. An elevation truck according to any of the claims 1 - 4, **characterized in that** the elevation truck comprises at least one elongated pawl (20) pivotally mounted on the frame (1) at one end and bearing against a bearing contact on the frame (1) with the free, second end when this frame is tilted backwards to an angle equal to or smaller than a pre-determined angle in relation to a vertical plane.

6. An elevation truck according to any of the claims 1 - 5, **characterized in that** the frame (1) comprises two side members (2) interconnected by at least one crossbar (3).

7. An elevation truck according to any of the claims 1 - 6, **characterized in that** the carrier (8) comprises two rails (9) interconnected by at least one crossbar (10).

8. An elevation truck according to any of the claims 1 - 7, **characterized in that** the at least one hanging pawl (20) is pivotally mounted on the at least one crossbar (10) of the carrier (8), whereas the bearing contact on the frame (1) for giving support to the pawl (20) is mounted on the at least one crossbar (3) on the frame (1).

9. A method for, by means of the elevation truck according to the claims 1 - 8, moving e.g. a pallet from a first supporting base and a second supporting base located at a higher elevation, **characterized in that** the at least one fork (22) of the elevation truck is pushed in under the pallet with the carrier (9) in lower position, that the elevation truck is tilted backwards so that the pallet is lifted free of the first supporting base, that the elevation truck is moved to the second supporting base, that the carrier (8) is displaced to second position by stepping on the foot pedal (14) of the actuator (11, 16) by means of a foot, that the pallet is placed on the second supporting base, and that the at least one fork (22) is pulled free of the pallet.

10. A method according to claim 9, **characterized in that** the foot is removed from the foot pedal so that the carrier (8) is lowered from second position to a third position in which the pawl (20) is bearing against the bearing contact of the frame (1), that the pallet is placed on the second base, and that the at lease one fork (22) is pulled free of the pallet.
